(19) Europäisches Patentamt
European Patent Office
Office européen des brevets

(11) **EP 2 838 050 A2**

(12) **EUROPEAN PATENT APPLICATION**

(43) Date of publication:
**18.02.2015 Bulletin 2015/08**

(51) Int Cl.:
***G06K 9/00*** (2006.01)

(21) Application number: **14180114.2**

(22) Date of filing: **07.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.08.2013 JP 2013168881**
**11.06.2014 JP 2014120743**

(71) Applicant: **Ricoh Company, Ltd.**
**Tokyo 143-8555 (JP)**

(72) Inventors:
• **Ishigaki, Tomoko**
**Tokyo, 143-8555 (JP)**
• **Yokota, Soichiro**
**Tokyo, 143-8555 (JP)**
• **Li, Xue**
**Tokyo, 143-8555 (JP)**

(74) Representative: **Schwabe - Sandmair - Marx**
**Patentanwälte**
**Stuntzstraße 16**
**81677 München (DE)**

(54) **Image processing unit, object detection method, object detection program, and vehicle control system**

(57) An image processing unit which detects a target object in an imaging area of a captured image includes a static dictionary (259) and a dynamic dictionary (258) which contain feature amounts of candidate objects. A target object detector detects the target object on the basis of the dynamic dictionary when a target object has been detected. When the target object is not continuously detected in the following frames, the target object detector detects the target object on the basis of the static dictionary.

FIG.5

**Description**

The present invention relates to an image processing unit which detects a target object in an imaging area of a captured image, object detection method and program using such an image processing unit, and a vehicle control system incorporating this image processing unit.

There is a known accident prevention system for a vehicle which detects an obstacle such as a vehicle, pedestrian from an image of a vehicle's surrounding captured with an in-vehicle camera and acquires vehicle driving information, to control the vehicle's steering and automatic braking and avoid collision. Such a system can precisely, quickly detect an obstacle as a pedestrian and reduce crash risks between the vehicle and the obstacle. Japanese Laid-open Patent Application Publication No. 2012-164275, for example, discloses recognizing a target object by comparing images captured with an in-vehicle camera and a large amount of pattern images. This technique is to calculate a distance with a surveying system and recognize a set of points in the same distance as a potential obstacle to perform pattern matching of an image of the obstacle and a preset pattern image (template) and determine whether or not the obstacle is a pedestrian.

However, this technique has a problem that the pattern matching with a large amount of pattern images is a heavy load so that it takes a long time to detect a target object such as a pedestrian.

The present invention aims to provide an image processing unit which can quickly detect a target object from a captured image by reducing time and labor for matching process and shortening process time, as well as to provide object detection method and program using such an image processing unit and a vehicle control system comprising the image processing unit.

According to one embodiment, an image processing unit comprises a first feature amount storage in which a certain feature amount of a candidate of an object to be recognized in an image is stored, the image being input in a unit of frame from an imager, an image processor including a second feature amount storage in which the certain feature amount is stored when the candidate of the object corresponds to the certain feature amount stored in the first feature amount storage, and a target object detector to detect, on the basis of the second feature amount storage, the candidate of the object as a target object from the image of frames subsequent to a frame including the certain feature amount stored in the second feature amount storage, and when the target object is not detected, to detect the target object on the basis of the first feature amount storage.

Features, embodiments, and advantages of the present invention will become apparent from the following detailed description with reference to the accompanying drawings:

FIG. 1 schematically shows a vehicle incorporating a vehicle control system comprising an image processing unit according to a first embodiment;
FIG. 2 is a block diagram of a hardware configuration of the vehicle control system comprising the image processing unit in FIG. 1;
FIG. 3 is a function block diagram of a stereo image processor of the image processing unit in FIG. 2;
FIG. 4 is a function block diagram of the details of a solid object detector of the stereo image processor in FIG. 3;
FIG. 5 is a function block diagram of the details of a pattern matcher of the solid object detector in FIG. 4;
FIG. 6 shows a disparity occurring when two right and left cameras of the stereo camera are used;
FIG. 7A shows corrected image data a1' of a forward area captured by an imager of the vehicle in a vehicle traveling direction and FIG. 7B shows a linear approximation of a vertical disparity graph corresponding to the corrected image data a1';
FIG. 8 shows at top corrected image data a1' of a forward area captured by an imager of the vehicle in a vehicle driving direction and shows at bottom a horizontal disparity graph corresponding to the corrected image data a1';
FIG. 9 is a flowchart for the image processing by the image processing unit according to the first embodiment;
FIG. 10 is a flowchart for the pattern matching by a pattern matcher according to the first embodiment;
FIG. 11 is a function block diagram of the details of a solid object detector of an image processing unit according to a second embodiment;
FIG. 12 is a function block diagram of a tracker in FIG. 11;
FIG. 13 is a flowchart for the tracking by the tracker according to the second embodiment;
FIG. 14 is a flowchart for the pattern matching of the pattern matcher according to the second embodiment; and
FIG. 15 shows an example of the processing by an identical object determiner.

Hereinafter, embodiments of a vehicle control system including an image processing unit will be described in detail with reference to the accompanying drawings. Wherever possible, the same reference numbers will be used throughout the drawings to refer to the same or like parts.

First Embodiment

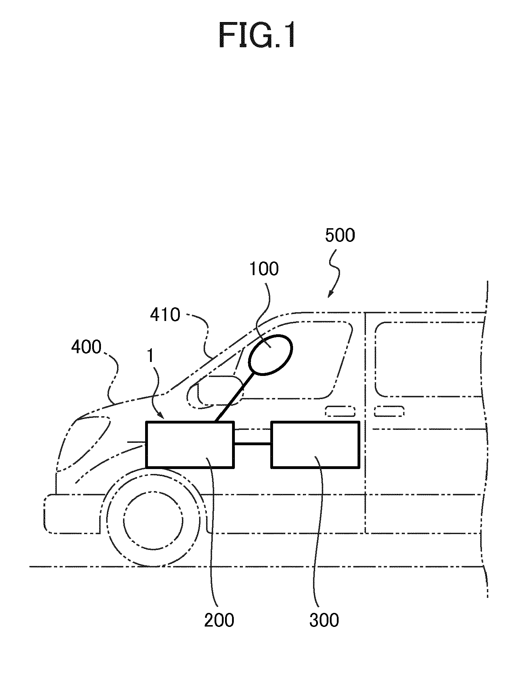

The vehicle control system according to the present invention is applicable not only to a vehicle but also to a ship, an airplane, and a moving device such as an industrial robot, for example. Further, in addition to a moving device, it is widely applicable to a device and a system using an object recognition such as intelligent transport system (ITS) or an image analyzer to detect a target object in an imaging area from a captured image. FIG. 1 schematically shows the exterior of a vehicle 400 incorporating a vehicle control system 500 having an image processing unit 1 according to a first embodiment.

In FIG. 1 the vehicle control system 500 comprises an imaging unit 100 as an imager, the image processing unit 1 as a target object detector, and a vehicle control unit 300 as a vehicle controller. The imaging unit 100 is mounted in the vehicle 400 such as automobile to capture an image of the vehicle's surroundings. According to the present embodiment an imaging area is, for example, a vehicle forward area or imaging area in a vehicle traveling direction. Captured images are output from the imaging unit 100 as still image to the image processing unit 1 in a unit of frame. The image processing unit 1 includes a stereo image processor 200 as image processor to analyze each frame of a captured image output from the imaging unit 100, detect an object to be recognized such as pedestrian present in an imaging area and output a result of the detection. The vehicle control unit 300 controls the motion of the vehicle 400 on the basis of a result of the detection by the image processing unit 1.

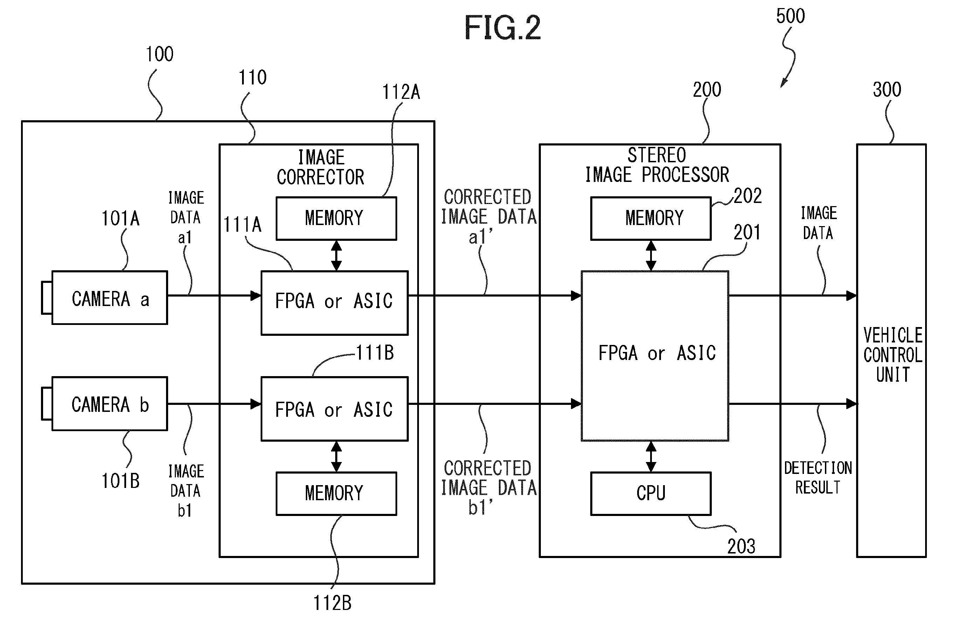

FIG. 2 shows the hardware configuration of the essential elements of the vehicle control system 500 including the image processing unit 1. The imaging unit 100 comprises a stereo camera including two cameras 101A, 101B (cameras a, b) as imager and an image corrector 110 to correct image data captured by the cameras 101A, 101B. The cameras 101A, 101B are structured as same. The imaging unit 100 is for example installed in the vicinity of a not-shown rearview mirror on a windshield 410 of the vehicle 400, as shown in FIG. 1. The imaging area is set to a forward area of the vehicle 400 in a traveling direction.

Although not shown, the cameras 101A, 101B each comprise an optical system such as imaging lens, an image sensor having a pixel array of two-dimensionally arranged light receiving elements, and a signal processor to convert analog signals (light receiving amount of each light receiving element on the image sensor) to digital signals to generate image data for output. According to the present embodiment the optical axes of the optical systems of the cameras 101A, 101B are set to be parallel to a horizontal or transverse direction and pixel lines of right and left images are assumed to not shift longitudinally from the horizontal optical axis. Alternatively, the optical axes of the optical systems can be parallel to a vertical direction.

The image corrector 110 performs various corrections to the image data (hereinafter, image data a1, image data b1) from the cameras 101A, 101B and converts it to an image obtained by an ideal pinhole model, that is, corrected image data a1' and corrected image data b1'. In FIG. 2 the image corrector 110 includes FPGAs (Field-Programmable Gate Array) 111A, 111B and memories 112A, 112B for the cameras 101A, 101B, respectively. The FPGAs 111A, 111B execute various corrections including magnification correction, image center correction, and distortion correction to the image data a1, b1. The memories 112A, 112B contain correction parameters for these corrections. The corrected image data a1', b1' are transmitted to the stereo image processor 200 from the FPGAs 111A, 111B. In place of the FPGAs 111A, 111B, ASIC (Application Specific Integrated Circuit) can be used, for instance.

As shown in FIG. 2, the stereo image processor 200 of the image processing unit 1 comprises an FPGA 201, a memory 202, and a CPU (Central Processing Unit) 203. The FPGA 201 performs image processing onto the corrected image data a1', b1' to generate recognition-processed images and image data including disparity image data, brightness image data. The memory 202 stores the corrected image data a1', b1' (brightness image data), disparity image data, and recognition-processed images as well as a computer readable object detection program. The CPU 203 executes various calculations by the object detection program stored in the memory 202 and controls the respective elements of the stereo image processor 200, FPGA 201, and memory 202.

The stereo image processor 200 performs image processing to the corrected image data a1', b1' output from the imaging unit 100. Specifically, it generates disparity image data from the corrected image data a1', b1', brightness image data of either (reference image) of the corrected image data a1', b1', and detects a target object such as vehicle, pedestrian by pattern matching. According to the present embodiment the stereo image processor 200 is configured to output image data such as disparity image data and brightness image data and results of detection or pattern matching. However, the present invention should not be limited to such an example. For example, the vehicle control unit 300 or another unit can be configured to output only the results of detection if the image data is not used. Further, in the present embodiment the corrected image data a1' is set to a reference image and the corrected image data b1' is set to a comparative image.

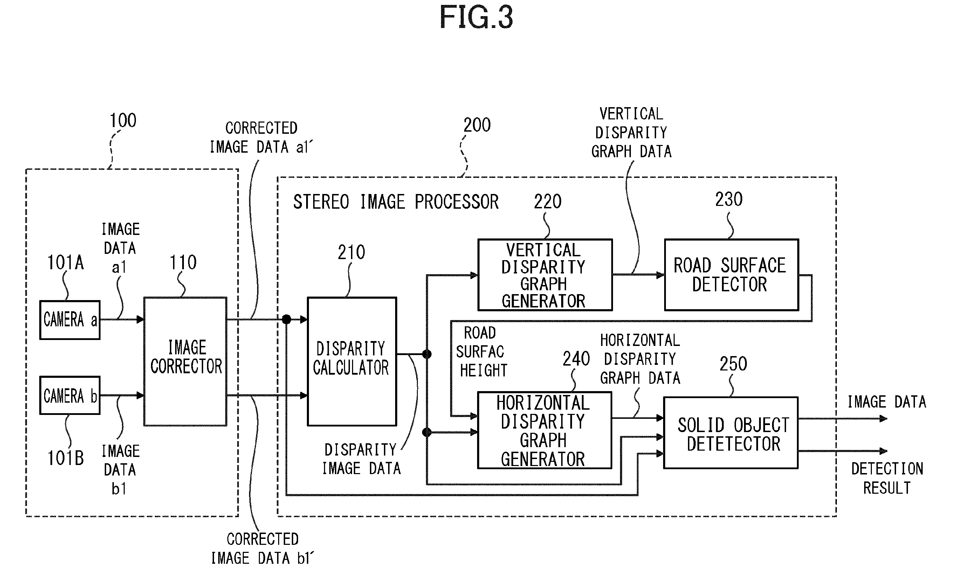

FIG. 3 is a function block diagram of the details of the stereo image processor 200. In the drawing the stereo image processor 200 comprises a disparity calculator 210, a vertical disparity graph generator (vertical disparity data generator) 220, a road surface detector (moving plane detector) 230, a horizontal disparity graph generator (horizontal disparity data generator) 240, and a solid object detector (target object detector) 250.

The disparity calculator 210 generates disparity image data from the corrected image data a1', b1' output from the image corrector 110. To acquire disparity image data, it calculates a disparity value of corresponding portions of the two corrected images. The corrected image data a1' is reference image data and the corrected image data b1' is comparative image data. Herein, the disparity value is a positional shift amount of an image portion of comparative image data (corrected image data b1') relative to that of the reference image data (corrected image data a1') corresponding to the same position in the imaging area. By triangulation a distance to the same position in the imaging area corresponding to the image portion in question can be calculated.

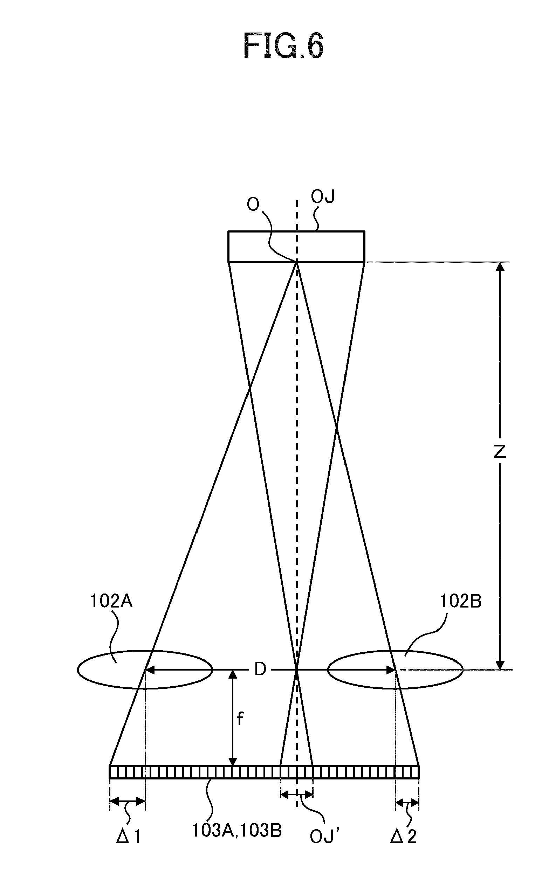

Referring to FIG. 6, how to calculate the distance by triangulation is described in detail. FIG. 6 shows the relationship between an object OJ and the stereo camera (cameras 101A, 101B). In the drawing the reference numerals 102A, 102B denote imaging planes of lens systems of the cameras 101A, 101B, and 103A, 103B denote imaging planes of image sensors thereof, respectively. The code OJ' denotes an image of the object OJ formed on the imaging planes. The imaging point O of the object OJ is formed on the imaging planes 103A, 103B of the image sensors such as CMOS by the imaging planes 102A, 102B of the cameras 101A, 101B, as shown in FIG. 6.

The disparity value d between the cameras 101A, 101B can be calculated by the following formula (1):

$$d = \Delta 1 + \Delta 2$$

where $\Delta 1$, $\Delta 2$ are shift amounts from the center of the imaging. The shift amounts $\Delta 1$, $\Delta 2$ are found from the positions on the imaging planes 103A, 103B of the image sensors at which the imaging point O is imaged.

Further, a distance Z to the object OJ from the cameras 101A, 101B can be calculated by the following formula (2):

$$Z = D \times (f/d)$$

where f is a focal length of the imaging planes 102A, 102B of the lens systems and D is the distance (base length) between the optical axes of the imaging planes 102A, 102B.

The disparity calculator 210 calculates a disparity for each pixel by the formula (1). It can be also configured to calculate the distance to the imaging point O of the object OJ by the formula (2).

Disparity image data calculated by the disparity calculator 210 represents a disparity image expressed as pixel values corresponding to disparity values of respective portions of the reference image data (corrected image data a1'). The disparity calculator 210 outputs the disparity image data to the vertical disparity graph generator 220, horizontal disparity graph generator 240, and solid object detector 250. The disparity calculator 210 outputs the distance to the object OJ to the solid object detector 250 together with the disparity image data.

The vertical disparity graph generator 220 creates vertical disparity graph data according to the disparity image data from the disparity calculator 210. In this graph abscissa axis indicates disparity value and vertical axis indicates vertical coordinates of an image with the top end of the image set to zero. The vertical disparity graph is a Cartesian coordinate system defined by the image vertical coordinates and the disparity value, in which the pixel values or disparity values of a disparity image are distributed. The vertical disparity graph data is transmitted to the road surface detector 230.

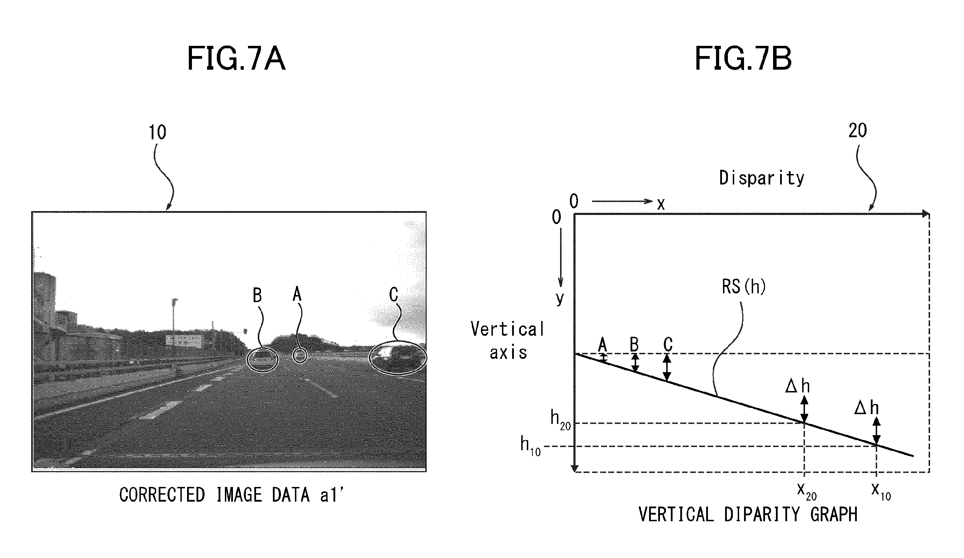

FIGs. 7A, 7B show reference image data 10 and a vertical disparity graph 20 by way of examples, respectively. The reference image data 10 or corrected image data a1' in FIG. 7A is image data of the vehicle forward area (imaging area) in the traveling direction captured with the imaging unit 100 of the vehicle 400. The vertical disparity graph 20 in FIG. 7B is obtained by straight-line approximation of vertical disparity graph data corresponding to the reference image data. The abscissa axis x of the vertical disparity graph 20 is disparity and the vertical axis y is image vertical coordinates.

The road surface detector 230 detects a road surface area of the disparity image data on which the road surface RS appears, according to the vertical disparity graph data. The road surface area is a plane on which the target object moves. Specifically, since the cameras 101A, 101B capture the forward area of the vehicle, the road surface area largely occupies a bottom part of the image, as shown in FIG. 7A. Further, on the disparity image data the disparity value of the road surface area decreases at an approximately constant ratio as the position goes upward, and the disparity values of the pixels on the same vertical coordinates (same transverse line) of the road surface area are approximately the same. Accordingly, the pixels composing the road surface area in the bottom part of the image data are linearly distributed on the vertical disparity graph. The road surface detector 230 detects the pixels distributed in the vicinity of a negatively sloping line (FIG. 7B) among those on the vertical disparity graph as the pixels composing the road surface area. Further, in FIG. 7B the codes, A, B, C denote pixels corresponding to other vehicles A, B, C. Objects (sometimes referred to as solid object) such as other vehicles have certain heights but their vertical disparity values do not vary so that they are represented by an approximately vertical line.

The road surface detector 230 outputs a height h (y-coordinate) of the road surface RS relative to a distance (x-coordinate) from the stereo camera. In the vertical disparity graph 20 in FIG. 7B, the height h at the distance $x_{10}$ (for example, 10 m) from the stereo camera is $h_{10}$. The height h at $x_{20}$ (20 m, for example) is $h_{20}$.

The horizontal disparity graph generator 240 creates horizontal disparity graph data from the disparity image data from the disparity calculator 210. In this graph abscissa axis indicates the horizontal coordinates of an image with the left end of the image set to zero (origin) and vertical axis indicates disparity value. To create the horizontal disparity graph data, it creates a horizontal disparity graph of the periphery of the road surface higher by a height $\Delta h$, i.e., at height $h - \Delta h$ ($h_{10}-\Delta h$, $h_{20}-\Delta h$,...), by using the height h of the road surface RS. The positions of the heights $\Delta h$ and $h-\Delta h$ ($h_{10}-\Delta h$, $h_{20}-\Delta h$) are shown in FIG. 7B. Since the left end of the image is set to origin, y-coordinate of the position higher by $\Delta h$ than the road surface is $h - \Delta h$ ($\Delta h>0$).

The height $\Delta h$ is set to a value such that a target object such as vehicle or pedestrian is detectable with buildings or telephone poles excluded. It is preferable that an actual value of the height $\Delta h$ is about 15 to 100 cm. $\Delta h$ should not be limited to a single value and can be several different values $\Delta h1$, $\Delta h2$, ... to generate different horizontal disparity graphs for different target objects, other vehicles or pedestrians.

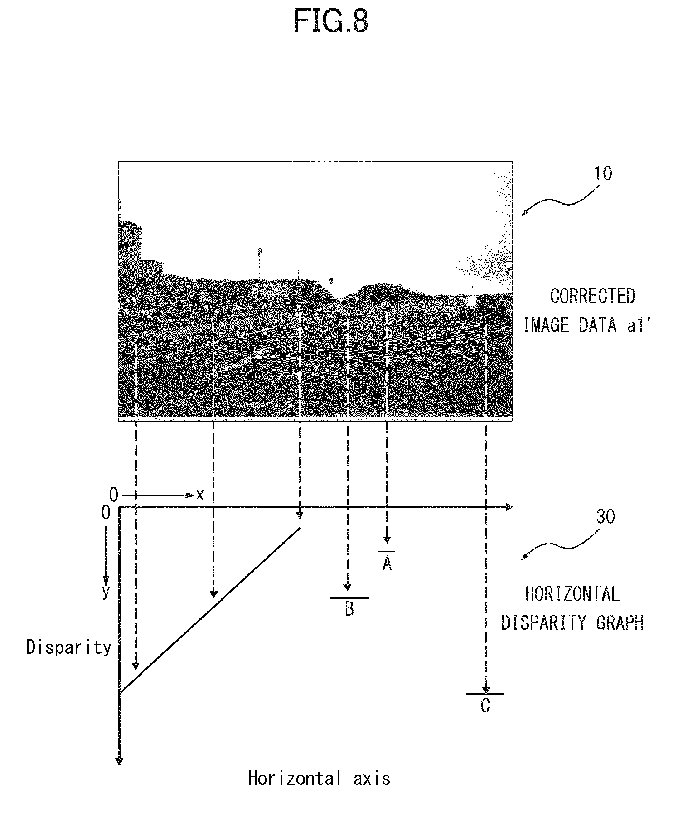

FIG. 8 shows corrected image data a1'10 and a horizontal disparity graph 30 thereof generated by the horizontal disparity graph generator 240. As shown in FIG. 8, a disparity occurs in solid objects (the other vehicles A, B, C and side faces of guardrails) on the road surface RS. A disparity of a solid object at the front of image or at a close distance is large while that at the back thereof or at a far distance is small.

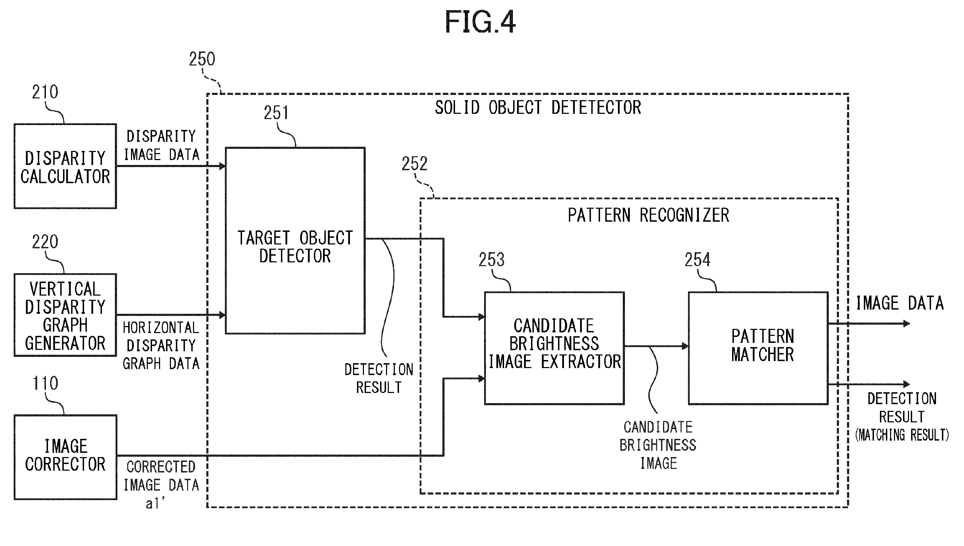

The solid object detector 250 detects a target object from the brightness image data or corrected image data a1'10 according to the horizontal display graph data from the horizontal disparity graph generator 240, the disparity image data from the disparity calculator 210 and the corrected image data a1' from the image corrector 110. In the following the solid object detector 250 is described in detail referring to FIG. 4. The solid object detector 250 comprises a target object detector 251 and a pattern recognizer 252. The pattern recognizer 252 comprises a candidate brightness image extractor 253 and a pattern matcher 254 in FIG. 4.

The target object detector 251 extracts horizontal coordinates of a portion with the same disparity value d from the horizontal disparity graph 30 (bottom view of FIG. 8), referring to the disparity value d calculated by the disparity calculator 210. The portion with the same disparity value d corresponds to a candidate of the target object. It can be configured to extract the horizontal coordinates of the portion in question only when the transverse width of the portion with the same disparity value d matches a preset transverse width (width of a person or vehicle or the like) of a candidate of the target object. The portion with the same disparity value d can be calculated by the foresaid formulas (1) and (2). The target object detector 251 focuses on a disparity image of the portion at the horizontal coordinates, acquires the size of the portion with the same disparity value d, determines whether or not the size matches a preset size of the target object, and detects a matching object as the target object. Then, it outputs as a result of detection at least the position coordinates (x and y coordinates on the disparity image) of the detected object. Here, it is not necessary to output all the position coordinates of the pixels composing the object. For example, the coordinates of gravity center of the area surrounding the object are output.

Moreover, the target object detector 251 can be configured to output a kind of the target object as a vehicle or pedestrian, for example, from the size of the detected target, in addition to the position coordinates. The sizes of a vehicle and a pedestrian are defined and stored in advance to be able to easily determine a kind of the detected target object. A kind of the target object can be used as follows. For instance, when a kind of the target object is a vehicle, the pattern recognizer 252 performs pattern matching only on pattern images corresponding to a vehicle, as later described. Likewise, when the kind is a pedestrian, the pattern recognizer 252 performs pattern matching only on pattern images corresponding to a pedestrian Thereby, pattern matching can be more quickly, efficiently feasible.

The candidate brightness image extractor 253 of the pattern recognizer 252 receives a result of the target object detection and corrected image data a1' from the target object detector 251 and image corrector 110, respectively. It extracts a corrected image corresponding to an area represented by the position coordinates of the target object on the basis of the received data and outputs it as a brightness image of a candidate of the target object (hereinafter, candidate brightness image).

The candidate brightness image is input to the pattern matcher 254 of the pattern recognizer 252. The pattern matcher 254 performs pattern matching of the candidate brightness image and a pattern image registered as a feature amount in a static or dynamic dictionary of the memory 202. When they match each other, the pattern matcher 254 outputs at least the position coordinates of the target object on the brightness image as a result of the pattern matching. It can be configured to output a kind of the target object in addition to the position coordinates. Herein, the term, "match" should not be defined as the exact match and can include an approximate match. That is, it is sufficient that the candidate brightness image is recognized to correspond to a pattern image registered in the dictionary of the memory 202.

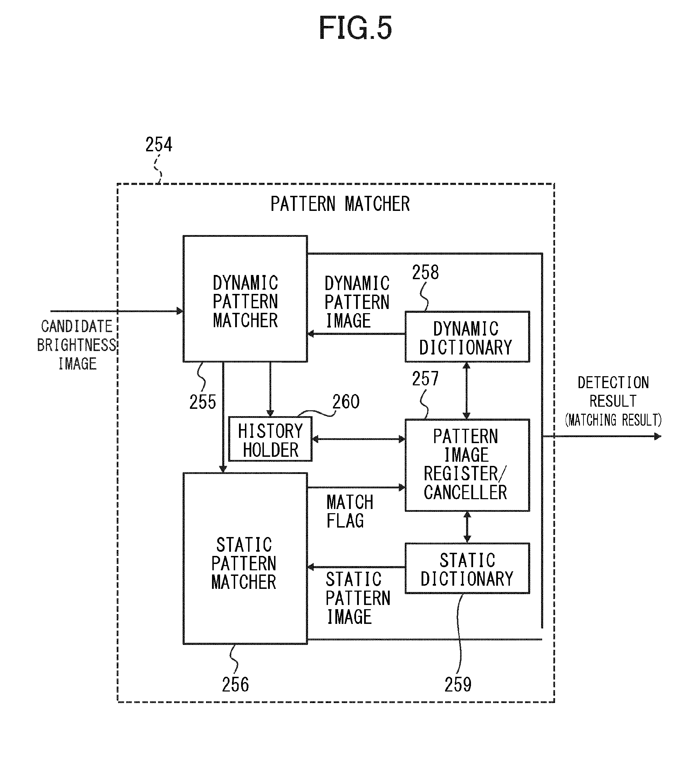

Next, the details of the pattern matcher 254 are described with reference to FIG. 5. The pattern matcher 254 comprises a dynamic pattern matcher 255, a static pattern matcher 256, a pattern image register/canceller 257, a static dictionary 259 as a first feature amount storage, a dynamic dictionary 258 as a second feature amount storage and a history holder 260. The storage area of the dynamic dictionary 258, static dictionary 259, and history holder 260 are secured on the memory 202.

Various kinds of pattern images (template images) of the target object such as vehicles, persons (pedestrian, person riding on a bicycle or motorcycle) are preset in the vehicle control system 500 and are registered or stored as a feature amount in the static dictionary 259. Pattern images are stored in the static dictionary 259 at a timing at which the image processing unit 1 is boosted upon the engine ignition of the vehicle 400, power-on of the vehicle control system 500, or the like. Pattern images are, for example, of various types of domestic and international vehicles, or of the entire bodies of pedestrians of different ages as children, adults, elderly people, of different heights, or of different genders. Further, pattern images of a part of the body of a pedestrian as head, torso, or legs or pattern images of orientation of a pedestrian (lateral or front, for example) are suitable for use in detecting a pedestrian partially hidden by a shielding object such as guardrails. Pattern images of a person riding on a bicycle, motorcycle, or wheel chair are also stored. According to the present embodiment the static dictionary 259 as first feature amount storage is included in the stereo image processor 200. Alternatively, it can be configured that the static dictionary 259 is provided outside and the stereo image processor 200 fetches pattern images therefrom via network.

The dynamic dictionary 258 temporarily stores, as a feature amount, pattern images having matched the target object detected by the image processing unit 1. The dynamic dictionary 258 is initialized at a timing at which the image processing unit 1 is boosted upon the engine ignition of the vehicle 400, power-on of the vehicle control system 500, or the like. Every time a target object is detected, a pattern image of a target object in question is registered in the dynamic dictionary 258 in image processing. Alternatively, the initialization of the dynamic dictionary 258 can be performed at completion of the entire processing of the image processing unit 1.

Pattern images are transferred between the dynamic dictionary 258 and the static dictionary 259. For example, if a pattern of a brightness image of a candidate object area matches a pattern image registered in the static dictionary 259 in pattern matching and is determined to be a target object, the pattern image in question is transferred from the static dictionary 259 to the dynamic dictionary 258 and deleted from the static dictionary 259. Meanwhile, if a target object corresponding to a pattern image registered in the dynamic dictionary 258 is not continuously detected in the following frames, the pattern image in question is returned to the static dictionary 259 and deleted from the dynamic dictionary 258. According to the present embodiment pattern images are deleted from the static dictionary 259 as above, however, they can remain stored therein. However, deleting the pattern images contributes to speeding-up of image processing.

It can be configured that pattern images are registered according to their sizes irrespective of a kind of a target object, for example, or they can be sorted by a kind of a target object before registered. Thus, more rapid and efficient image processing can be realized by outputting a kind of a target object and pattern matching the target object with a set of pattern images corresponding to this kind only.

The history holder 260 stores matching results by the dynamic pattern matcher 255. A matching result of a candidate brightness image extracted from frame and a pattern image in the dynamic dictionary 258 are registered therein. Match information indicating the matching of the pattern image in the dynamic dictionary 258 and the target object are registered in association with the pattern image in question in the history holder 260. In a case where the pattern image matches the candidate brightness image again in subsequent frames, the result that they have matched at plural times is registered in the history holder 260.

If a pattern image does not match an object in a previous frame of the candidate brightness image in the following frames continuously, this pattern image is transferred from the dynamic dictionary 258 to the static dictionary 259. Match information corresponding to the pattern image is initialized in the history holder 260. It is highly probable that a candidate object corresponding to the pattern image is no longer present in the imaging area and is not captured in subsequent frames when non-matching of the candidate object and the pattern image continues in plural frames. Deleting such a pattern image from the dynamic dictionary 258 and decreasing the number of patter images therein for use in pattern matching makes it possible to realize more efficient pattern matching.

The match information stored in the history holder 260 should not be limited to the one described above as long as it indicates that the pattern image matches or does not match the candidate object in a previous frame. For example, a 5-bit storage area as the history holder 260 is secured for each pattern image on the memory 202 to store match or non-match information of five frames therein. "1" indicating match and "0" indicating non-match are set on each bit. For example, when a pattern image in the dynamic dictionary 258 and a target object match in the first frame but do not match in the second frame, "1" is set on the first bit and "0" is set on the second bit. Thus, match or non-match in previous frames can be checked. Accordingly, it is possible to distinctively determine whether or not non-match frames are continuous and efficiently perform pattern image transfer and pattern matching. According to the first embodiment the history holder 260 is configured to store match or non-match information for five frames since continuity of non-match over three or four frames is determined by way of example. However, it should not be limited to such an example. Preferably, the number of bits are prepared in accordance with the number of frames for which non-match is determined. Further, according to the first embodiment the dynamic dictionary 258 and history holder 260 are separately provided and match information is registered in the history holder 260 in association with the pattern images stored in the dynamic dictionary 258. Alternatively, an area in which match information is registered can be provided in the dynamic dictionary 258. This enables the pattern images and match information to be rapidly read out or registered from/in the dynamic dictionary 258.

The dynamic pattern matcher 255 compares a candidate brightness image from the candidate brightness image extractor 253 with a pattern image in the dynamic dictionary 258 by pattern matching. When the candidate brightness image and the pattern image match each other, it outputs a result of the pattern matching that the candidate brightness image is a target object. At least the position coordinates of the target object are output as the result. Also, when the target object detector 251 determines a kind of the target object for output, the dynamic pattern matcher 255 can be configured to output the kind of the target object together with the position coordinates.

When the dynamic pattern matcher 255 determines that the candidate object and the pattern image in the dynamic dictionary 258 do not match, the static pattern matcher 256 compares the candidate brightness image from the candidate brightness image extractor 253 with a pattern image pre-stored in the static dictionary 259 by pattern matching. Upon determining that they match each other, it outputs the position coordinates of the target object and sets a match flag (not shown) at 1. The flag can be provided in the memory 202 or given to the pattern image register/canceller 257 as a parameter. Also, the static pattern matcher 256 can be configured to output the kind of the target object together with the position coordinates.

The pattern image register/canceller 257 transfers pattern images between the static dictionary 259 and dynamic dictionary 258. It receives the match flag from the static pattern matcher 256. At the match flag being 1, it registers the pattern image having matched the target object in the dynamic dictionary 258 and deletes it from the static dictionary 259. Further, it initializes the area of the history holder 260 corresponding to the pattern image registered in the dynamic dictionary 258 or deletes the match information of the pattern image from the history holder 260. Meanwhile, at the match flag being zero, the pattern image register/canceller 257 performs nothing and completes the processing.

Further, the pattern image register/canceller 257 deletes a pattern image having not matched in continuous frames from the dynamic dictionary 258, referring to the match information stored in the history holder 260, and returns it to the static dictionary 259. With no same target object present in continuous frames, the object is considered to have moved out from an area of interest so that the pattern image of the object is deleted from the data in the dynamic dictionary 258 which is preferentially checked. This can reduce the amount of pattern images which are compared with candidate brightness images, enabling more rapid pattern matching process. Note that continuous frames can be three or four frames and the number thereof is empirically adjusted.

The vehicle control unit 300 controls the motion of the vehicle 400 according to a result of the detection by the stereo image processor 200 of the image processing unit 1. The vehicle control unit 300 receives results of the target object detection by pattern matching and image data such as corrected image data a1' in sequence from the stereo image processor 200. Based on this information, the vehicle control unit 300 realizes automatic brake and steering function to avoid collision of the vehicle 400 with a target object as a pedestrian or another vehicle. Also, it realizes displaying pedestrians or other vehicles on the screen or issuing alarming sound or message in order to warn a driver. Thereby, it is possible to improve the prevention of collision with a pedestrian or another vehicle.

[Object Detection Method]

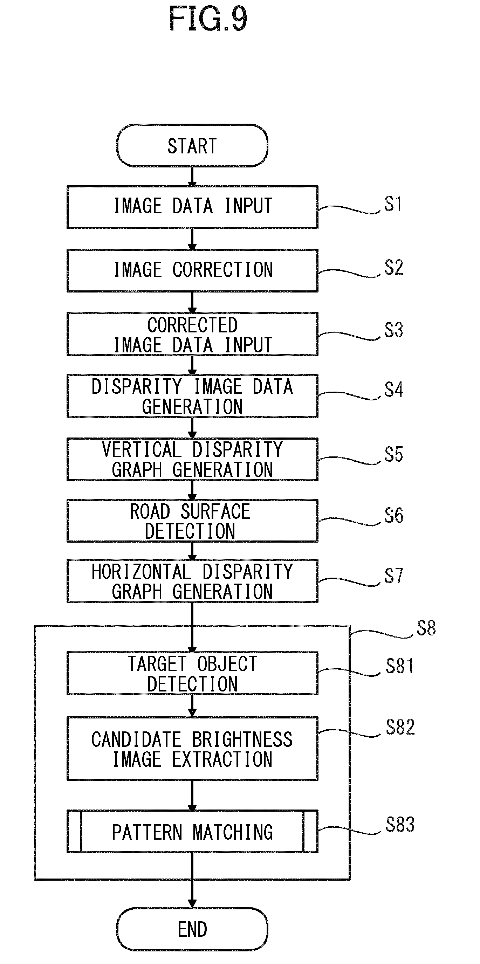

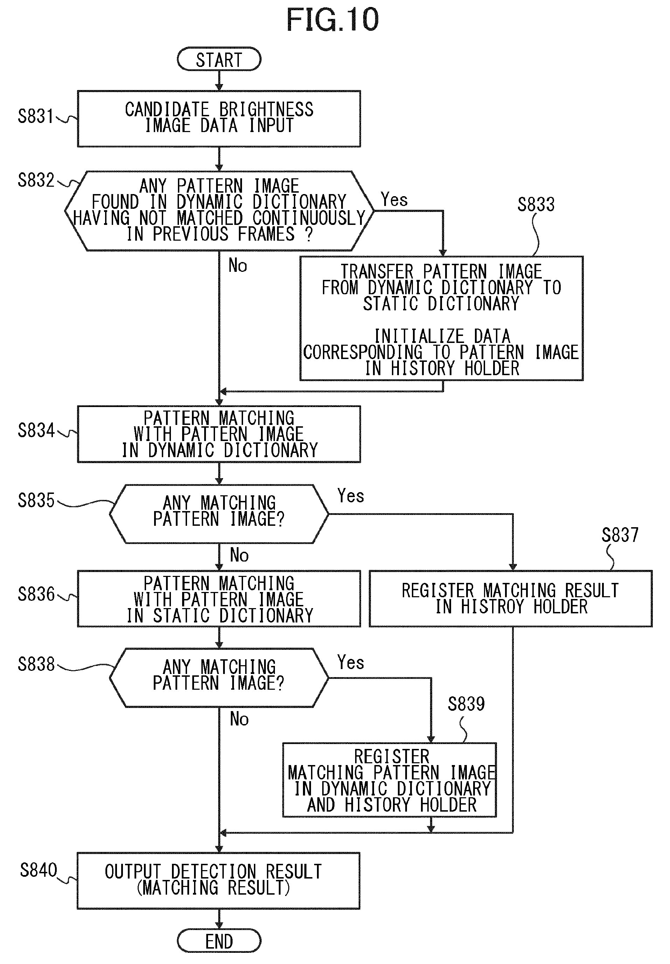

Next, the flow of the target object detection by the image processing unit 1 is described referring to FIGs. 9, 10. FIG. 9 is a flowchart for the image processing of the image processing unit 1 and FIG. 10 is a flowchart for pattern matching process of the pattern matcher 254 according to the first embodiment.

The image processing unit 1 executes image processing on each frame of image from the imaging unit 100. First, in step S1 the image corrector 110 of the imaging unit 100 receives the image data a1, b1 from the cameras 101A, 101B, and in step S2 it executes image processing as magnification correction, image centering correction, and distortion correction on the image data a1, b1 and outputs it to the stereo image processor 200. FIG. 7A shows an example of the corrected image data a1'10.

In step S3 the stereo image processor 200 receives the corrected image data a1', b1' and transmits it to the disparity calculator 210. In step S4 the disparity calculator 210 calculates a disparity value of each pixel of the corrected image data a1' as reference image data and generates disparity image data from which a disparity image with a pixel value equal to the disparity value is generated. Regarding the disparity image, the larger the disparity value of each pixel (the closer the distance), the larger the brightness thereof.

Disparity image data is generated in the following manner, for example. Blocks of pixels (5 pixels by 5 pixels, for instance) around a pixel of interest are defined on an arbitrary row of the reference image data (corrected image data a1'). On the same row of the comparative image data (corrected image data b1'), blocks of the same size are shifted by one pixel horizontally. Then, a correlation value between the feature amounts of the pixel values of the blocks of the reference image data and comparative image data is calculated. On the basis of the calculated correlation value, a block having a highest correlation with that of the reference image data is selected from the blocks of the comparative image data. Next, a positional shift amount between a pixel of interest of the block of the reference image data and a corresponding pixel of the selected block of the comparative image data is calculated as a disparity value d. Thus, disparity image data can be acquired by calculating the disparity value d in the entire area or a certain area of the reference image data.

The feature amount for use in matching can be a brightness value of each pixel of the block, for example. The correlation value can be, for example, the total sum of absolute values of differences between the pixels values (brightness values) of the corresponding blocks of the reference image data and comparative image data. The block with a smallest total sum is the block with a highest correlation.

Generated disparity image data are transmitted to the vertical disparity graph generator 220, horizontal disparity graph generator 240, and solid object detector 250. In step S5 the vertical disparity graph generator 220 generates a vertical disparity graph on the basis of the disparity image data as described above. FIG. 7B shows an example of the vertical disparity graph 20 corresponding to the reference image data (corrected image data a1') 10. This vertical disparity graph data is transmitted to the road surface detector 230.

The road surface detector 230 detects a road surface area from the disparity image data according to the vertical disparity graph data, and detects a height h of the road surface RS in step S6 and transmits it to the horizontal disparity graph generator 240. In step S7 the horizontal disparity graph generator 240 generates a horizontal disparity graph at a road surface height h-Δh according to the disparity image data from the disparity calculator 210 and road surface height h from the road surface detector 230, and outputs it to the solid object detector 250.

In step S8 the solid object detector 250 detects a target object as a pedestrian or another vehicle from the horizontal disparity graph data according to the horizontal disparity graph data from the horizontal disparity graph generator 240, the disparity image data from the disparity calculator 210 and corrected image data a1' from the image corrector 110.

Next, the processing in step S8 is described in detail. In step S81 the target object detector 251 detects a target object according to the horizontal disparity graph 30 from the horizontal disparity graph generator 240 and disparity image data from the disparity calculator 210. As described above, in this target object detection the horizontal coordinates of a portion with the same disparity value d are extracted from the horizontal disparity graph 30 (bottom view of FIG. 8), referring to the disparity value d calculated by the disparity calculator 210. Then, the target object detector 251 outputs the position coordinates (x, y coordinates of disparity image) of all detected objects (candidate objects) as a result of the detection. Also, in addition to the position coordinates, it outputs a kind of the target object as vehicle or pedestrian which is determined from the transverse width of a target object, when needed.

To detect a target object, the transverse width of an object, that is, the length of a straight line indicating a target object in a disparity image is calculated. The length of a straight line is obtained by calculating the distance between the object in question and the vehicle 400 from a mean disparity value of the straight line by the formulae (1) and (2) based on triangulation. The vertical length of a solid object is converted to an actual dimension on the basis of the calculated distance.

Further, the relationship between a size s of an object on a disparity image and an actual size S thereof is expressed by the following equation (3):

$$(3) \qquad S : Z = s : f$$

where f is a focal length of the imaging planes 102A, 102B and Z is a distance to the object.

The following equation (4) is obtained by solving the equation (3) regarding the actual size S. Thereby, the actual size S of the object can be calculated.

$$(4) \qquad S = s \times Z / f$$

A determination is made on whether or not the obtained length of the straight line (object) corresponds to a preset size of the target object. The position coordinates of only the straight line corresponding to the preset size are output as a detected target object to the candidate brightness image extractor 253.

Upon completion of the target object detection, the candidate brightness image extractor 253 of the pattern recognizer 252 extracts a brightness image of the target object on the basis of a result of the target object detection from the target object detector 251 and the corrected image data a1' (brightness image data) from the image corrector 110 in step S82. Specifically, the candidate brightness image extractor 253 extracts a corrected image (brightness image) corresponding to the coordinate area from the corrected image data a1' (brightness image data). The extracted corrected image is output as a candidate brightness image to the pattern matcher 254.

In step S83 the pattern matcher 254 of the pattern recognizer 252 performs pattern matching on the basis of the candidate brightness image from the candidate brightness image extractor 253. In the following the pattern matching in step S83 is described in detail referring to FIG. 10.

In step S831 the pattern matcher 254 receives candidate brightness image data of all objects detected in the frames processed. First, the pattern matcher 254 deletes pattern images in the dynamic dictionary 258 to efficiently perform data comparison. Specifically, in step S832 the dynamic pattern matcher 255 checks each of the pattern images in the dynamic dictionary 258 to determine whether a pattern image in question has not matched corresponding data in the history holder 260 in continuous frames. When a pattern image having not matched in 3 or 4 continuous frames (Yes in step S832) is found, the pattern image register/canceller 257 transfers this pattern image from the dynamic dictionary 258 to the static dictionary 259, initializes the corresponding data in the history holder 260 in step S833 and proceeds to step S834. When no pattern image having not matched in continuous frames (No in step S832) is found, it skips S833 and proceeds to step S834.

As described above, the pattern images having not matched continuously in previous frames are transferred from the dynamic dictionary 258 to static dictionary 259 before pattern matching. Thereby, it is possible to reduce the amount of pattern images in the dynamic dictionary 258 used for pattern matching with candidate brightness images in step S834. Thus, more rapid, more efficient pattern matching using the dynamic dictionary 258 can be realized. According to the present embodiment, the image transfer from the dynamic dictionary 258 to the static dictionary 259 is conducted on a frame basis. However, since the pattern images transferred are only the ones having not matched in the predetermined number of frames, the image transfer can be efficiently conducted and does not affect the efficiency of the pattern matching. Alternatively, the image transfer can be performed once for several frames or for a predetermined period, improving process efficiency.

Next, all candidate brightness images extracted in step S82 are subjected to processing in steps S834 to S840 when needed. First, the dynamic pattern matcher 255 extracts the pattern images from the dynamic dictionary 258 one by one and compares it with the candidate brightness image by pattern matching in step S834. In step S835 it determines whether or not the candidate brightness image matches any of the pattern images. With a match (Yes in step S835), it proceeds to step S837 and registers the result that they have matched in an area of the history holder 260 corresponding to the pattern image. Then, in step S840 it outputs a result of the pattern matching, that is, the position coordinates of the candidate brightness image determined as a target object. Then, a next candidate brightness image is subjected to the processing in step S834 and following steps. The pattern matching is completed when all the candidate brightness images are subjected to the processing. In addition to the position coordinates, a kind of the target object can be output, which can increase the types of processing the vehicle control unit 300 performs and enhance the accuracy of the processing.

As described above, when a pattern image in the static dictionary 259 matches the target object detected by the image processing unit 1, the pattern image in question is registered in the dynamic dictionary 258. Therefore, the dynamic dictionary 258 contains no pattern image when a first frame of image captured after the activation of the image processing unit 1 by engine driving or the like is subjected to image processing. In view of this, the first frame can be subjected directly to the pattern matching with the static dictionary 25 9 in step S836, skipping the steps S832 to 835. This can further improve processing efficiency. Further, with no pedestrians or other vehicles present around when the vehicle 400 has started driving, the image processing can start from step S836, skipping the steps S832 to S835.

Meanwhile, when there is no matching pattern image with the candidate brightness image (No in step S835), in step S836 the pattern images of all target objects in the static dictionary 259 are compared with the candidate brightness image by pattern matching. The pattern images are extracted from the static dictionary 259 one by one for comparison. In step S838 a determination is made on whether or not the candidate brightness image matches any of the pattern images. With a match (Yes in step S838), the static pattern matcher 256 sets the match flag to 1 and proceeds to step S839.

In step S839 at the match flag being 1, the pattern image register/canceller 257 transfers the matching pattern image from the static dictionary 259 to the dynamic dictionary 258, and registers the result that they have matched in an area of the history holder 260 corresponding to the matching pattern image. Then, it proceeds to step S840 and outputs a result of the pattern matching, that is, the position coordinates of the candidate brightness image determined as a target object. When needed, it outputs a kind of the target object in addition to the position coordinates. A next candidate brightness image is subjected to the processing in step S834 and following steps. The pattern matching is completed when all the candidate brightness images are subjected to the processing.

Meanwhile, if there is no matching pattern image with the candidate brightness image (No in step S838), this candidate brightness image is found to be a non-target object. In step S840 the static pattern matcher 256 outputs "no target object" as a result of pattern matching and subjects a next candidate brightness image to the processing in step S834 and following steps. Alternatively, it can be configured not to output any result and proceed to processing a next candidate brightness image. When all the candidate brightness images are subjected to the processing, the pattern matching is completed.

The first embodiment has described an example where comparing with the pattern images in the dynamic dictionary 258 or static dictionary 259 and outputting a result of the pattern matching are conducted for each candidate brightness image. However, the present invention should not be limited to such an example. For instance, all candidate brightness images detected from a frame of interest can be individually compared with pattern images first and then results of the pattern matching can be output as a whole.

Thus, the stereo image processor 200 of the image processing unit 1 detects a target object and outputs the results of the detection and image data to the vehicle control unit 300, when needed. The vehicle control unit 300 executes automatic brake and steering to control the vehicle 400 to avoid colliding with the target object. Also, it warns a driver by sound or a display on the screen to draw his or her attention to the presence of the target object.

According to the first embodiment, the image processing unit 1 first checks the dynamic dictionary 258 in which pattern images corresponding to target objects detected in previous frames are stored. If a candidate object matches any of the pattern images in the dynamic dictionary 258, the pattern matching can be completed without searching the static dictionary 259. Thus, comparison with a large amount of pattern images in the static dictionary 259 is omissible, which leads to shortening processing time. Accordingly, the vehicle control unit 300 can more rapidly deal with a target object, for example, preventing collision with the target object by detecting the target object quickly.

Further, according to the first embodiment the pattern images having not matched in previous frames are deleted from the dynamic dictionary 258 before searching the dynamic dictionary 258. This can reduce the amount of pattern images compared and improve the processing efficiency of the image processing unit 1.

Second Embodiment

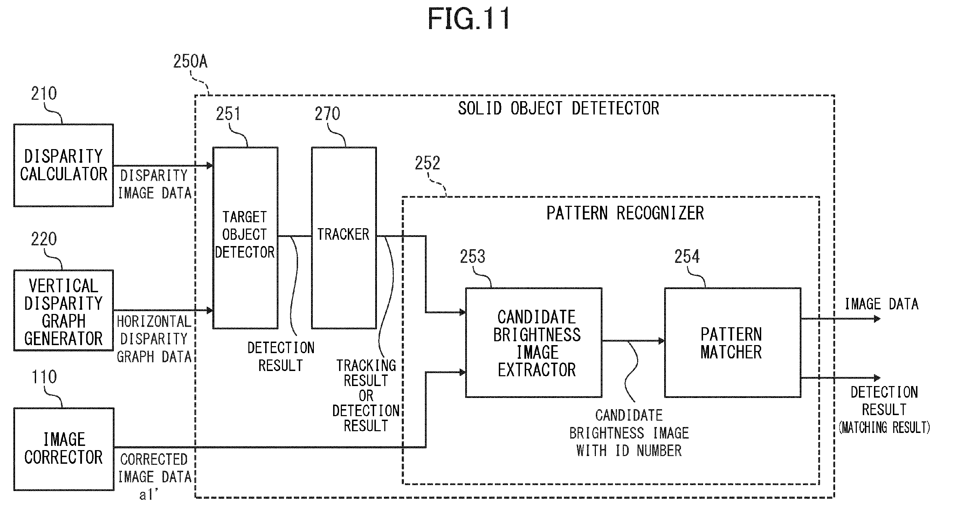

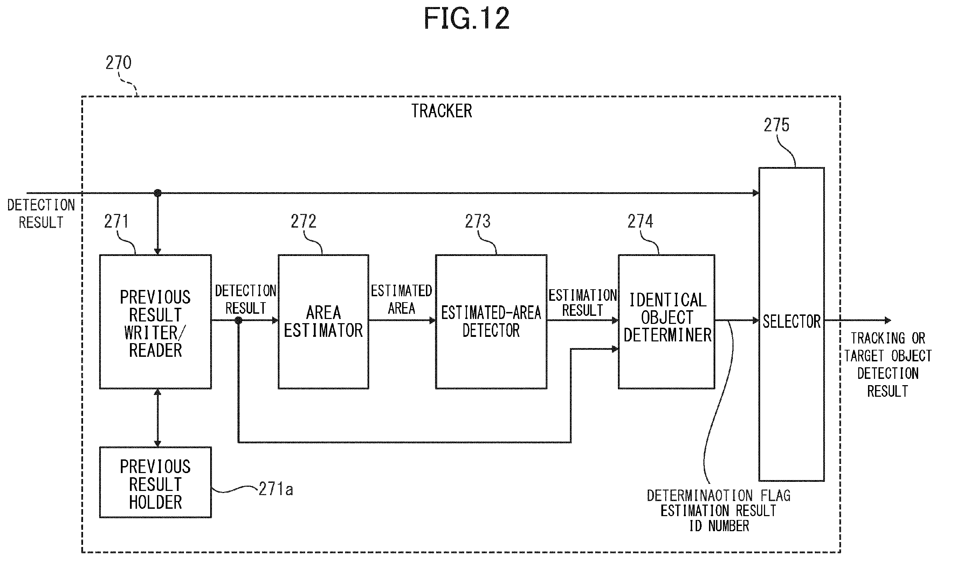

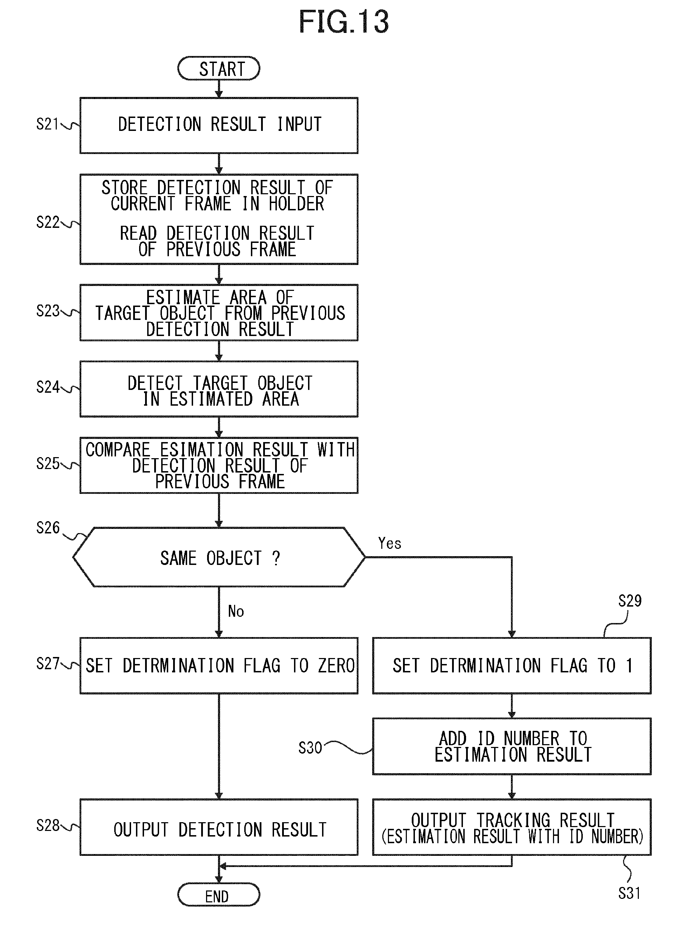

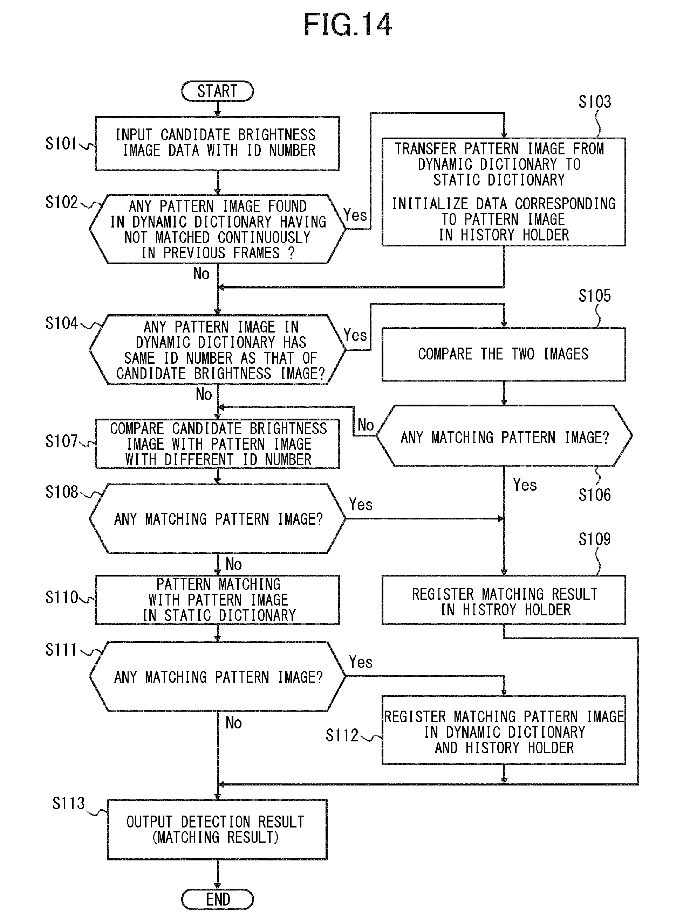

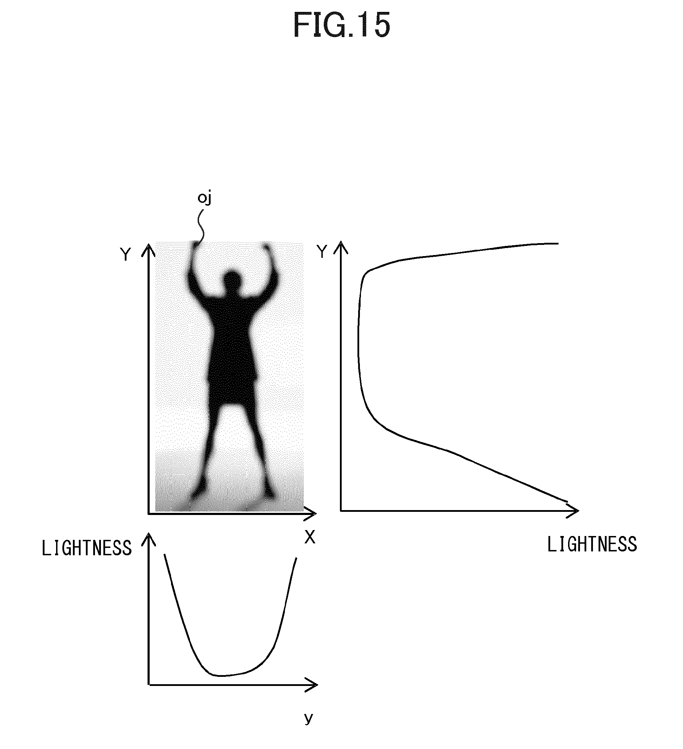

Now, an image processing unit according to a second embodiment is described referring to FIGs. 11 to 14. FIG. 11 is a function block diagram of a solid object detector 250A of the image processing unit. FIG. 12 is a function block diagram of a tracker 270. FIG. 13 is a flowchart for tracking process. FIG. 14 is a flowchart for pattern matching. FIG. 15 shows one example of the processing of an identical object determiner 274 of the tracker 270, showing lightness of an object oj at XY coordinates. The image processing unit according to the second embodiment has the same structure as that of the image processing unit 1 according to the first embodiment except for the tracker 270 added, as shown in FIG. 11, therefore, same or like parts are given the same reference numbers and a detailed description thereof is omitted. The pattern recognizer 252 including the candidate brightness image extractor 253 and pattern matcher 254 are structured same as those in the first embodiment but it operates differently therefrom since it receives tracking results from the tracker 270. Further, the dynamic dictionary 258 and static dictionary 259 of the pattern matcher 254 include an area in which an ID number is registered for each pattern image.

Referring to FIG. 11, the tracker 270 is placed between the target object detector 251 and candidate brightness image extractor 253. The tracker 270 receives the result of a target object detection from the target object detector 251, determines whether or not an object in the candidate brightness image is an object to be tracked, and outputs a result of tracking to the candidate brightness image extractor 253. When the object is not the one to be tracked, it outputs the result of the detection from the target object detector 251 as it is. The tracking result includes a unique number (hereinafter, ID number) to the target object as an identifier. Upon receipt of the result of tracking or detection, the candidate brightness image extractor 253 outputs a candidate brightness image, and when receiving the tracking result, it outputs the candidate brightness image with an ID number.

Referring to FIG. 12, the tracker 270 comprises a previous result writer/reader 271, a previous result holder 271a, an area estimator 272, an estimated-area detector 273, an identical object determiner 274, and a selector 275. The previous result holder 271a is provided in the memory 202 to store therein the results of target object detection in previously processed frames (hereinafter, previous frames) and a currently processed frame (hereinafter, current frame). The results are the position coordinates of the target object. The previous result writer/reader 271 accesses the previous result holder 271a to register a result of the detection in a current frame and read a result of detection in a previous frame for output to the area estimator 272. Several previous frames of image data are sufficient for the target object detection. The previous result holder 271a is configured to contain the detection results of five frames, for example. When no vacant area is available for writing a detection result of a current frame, the previous result writer/reader 271 deletes the result from the most previous frame and stores a result from a current frame. This can improve processing efficiency.

The area estimator 272 estimates an area of the current frame in which the target object is present from the detection result (position coordinates) of the previous frame stored in the previous result holder 271a. Alternatively, the estimation can be performed on the basis of a speed of the target object on the image calculated from the position coordinates, in addition to the position coordinates of a detected object.

The estimated-area detector 273 detects the target object in the area estimated by the area estimator 272 and outputs at least the position coordinates of the target object as a result of the estimation. It can be configured to output a kind of the target object such as vehicle or pedestrian in addition to the position coordinates, as the target object detector 251.

The identical object determiner 274 compares an estimation result of the estimated-area detector 273 with the target object detected in the current frame to determine whether they are the same object based on similarity between the two. For example, lightness of an object oj at Y coordinate and that at X coordinate are compared, as shown in FIG. 15. Further, in place of the similarity, they can be determined as the same object on the basis of their position coordinates with a degree of overlapping taken in to account. The sameness determination can be performed by or together with various conventional methods such as using a histogram. Upon determining that they are the same object, the identical object determiner 274 sets a determination flag at 1 and outputs an ID number of the object and the determination flag to the selector 275. Upon determining that they are not the same object, it sets the determination flag at 0 and outputs the determination flag to the selector 275. The determination flag can be provided in the memory 202 or to the selector 275 as a parameter.

The selector 275 selects a final result from the estimation result and detection result on the basis of the result of the determination by the identical object determiner 274 i.e., the determination flag, and outputs the result. Specifically, at the determination flag being 1, it outputs the estimation result from the estimated-area detector 273 and the ID number from the identical object determiner 274 as a tracking result. At the determination flag being 0, it outputs the detection result from the target object detector 251.

Hereinafter, the target object detection by the image processing unit according to the second embodiment is described. It is basically the same as that by the image processing unit 1 in the first embodiment with reference to FIG. 9, so that a description of like or same processing is omitted and the operation of a solid object detector 250A is chiefly described. As in the first embodiment, the target object detector 251 detects a target object on the basis of the horizontal disparity graph 30 from the horizontal disparity graph generator 240 and the disparity image data from the disparity calculator 210 (in step S81 of FIG. 9). Then, the target object detector 251 outputs, as a detection result, the position coordinates of all candidate objects detected as well as kinds of detected objects when needed.

Next, the tracker 270 performs a tracking processing on the target object detected from the target object detector 251, which is described referring to FIG. 13. In step S21 the tracker 270 receives a detection result of the current frame from the target object detector 251. The previous result writer/reader 271 stores the detection result of the current frame in the previous result holder 271 a of the memory 202 and reads a detection result of a previous frame from the previous result holder 271a and outputs it to the area estimator 272 in step S22.

The area estimator 272 estimates an area of the current frame in which the target object is detected according to the detection result of the previous frame, and outputs the position coordinates of the estimated area in step S23. The estimation of the area can be conducted by any known method. In step S24 the estimated-area detector 273 detects a target object in the estimated area and outputs the position coordinates thereof. The target object can be detected by extracting the horizontal coordinates of a portion including the points with the same disparity value d and determining the size of the portion, as in the processing of the target object detector 251.

The identical object determiner 274 receives the estimation result from the estimated-area detector 273 and compares the estimation result with the detection result of the previous frame in step S25, to determine whether or not they are the same object in step S26, as described above. When determining that they are not the same object (No in step S26), the identical object determiner 274 sets the determination flag at 0 in step S27. At the determination flag being zero the selector 275 outputs the detection result of the current frame from the target object detector 251 and completes the tracking in step S28.

Meanwhile, determining that they are the same object (Yes in step S26), the identical object determiner 274 sets the determination flag at 1 in step S29. In step S30 it also provides an ID number to the estimation result. The ID number can be applied in ascending order to detected target objects or preset ID numbers can be applied thereto according to a kind of a target object, for example. In step S31 the selector 275 outputs the tracking result as the estimation result and ID number and completes the tracking.

Thus, the detection result or tracking result is input from the tracker 270 to the candidate brightness image extractor 253. The candidate brightness image extractor 253 outputs a candidate brightness image on the basis of the detection result or tracking result (in step S82 of FIG. 9). It outputs the candidate brightness image with the ID number when receiving the tracking result.

The pattern matcher 254 performs pattern matching according to the candidate brightness image with or without the ID number. The candidate brightness image with no ID number is subjected to the pattern matching in the same manner as in the flowchart of FIG. 10. In the following the flow of pattern matching for the candidate brightness image with the ID number is described referring to FIG. 14. The pattern matcher 254 according to the second embodiment is structured same as that in the first embodiment of FIG. 5 and its elements are given the same reference numbers.

In step S101 of FIG. 14 the pattern matcher 254 receives the candidate brightness image with the ID number from the candidate brightness image extractor 253. The pattern matcher 254 determines the candidate brightness image as a tracking result when it is given the ID number.

Then, as in the first embodiment the dynamic pattern matcher 255 performs pattern matching on all the pattern images in the dynamic dictionary 258, referring to corresponding data in the history holder 260, to determine whether or not there is a pattern image which has not matched continuously in previous frames in step S102. If there is such a pattern image (Yes in step S102), the pattern image register/canceller 257 transfers the pattern image in question from the dynamic dictionary 258 to the static dictionary 259, initializes corresponding data in the history holder 260 in step S103 and proceeds to step S104. When there is no pattern image having not matched (No in step S102), it skips step S103 and proceeds to step S104.

In step S104 and following steps the dynamic pattern matcher 255 compares all the candidate brightness images from the candidate brightness image extractor 253 with the pattern images in the dynamic dictionary 258. In step S104 the dynamic pattern matcher 255 searches the dynamic dictionary 258 for a pattern image with the same ID number as that of the candidate brightness image of interest. With a pattern image with the same ID number found (Yes in step S104), the found pattern image and the candidate brightness image with the same ID number are subjected to pattern matching in step S105. A determination is made on whether or not they match each other in step S106. When they match (Yes in step S106), the dynamic pattern matcher 255 proceeds to the registration in the history holder 260 in step S109 while when they do not match, it proceeds to searching for a pattern image with a different ID number in step S107.

Step S107 is executed when the candidate brightness image of interest has not matched the pattern image with the same ID number. In step S107 the dynamic pattern matcher 255 compares the candidate brightness image with the pattern images with other ID numbers in the dynamic dictionary 258. It completes comparing when a matching pattern image is detected or all the pattern images are checked. In step S108 it determines whether or not there is a pattern image matching the candidate brightness image. With such a pattern image found (Yes in step S108), it proceeds to the registration in the history holder 260 in step S109 while with no pattern image found, it proceeds to checking the pattern images in the static dictionary 259 in step S110.

As an example in which the candidate brightness image matches a pattern image with a different ID number, assumed that adult and child pedestrians are detected in a previous frame and given ID numbers 1 and 2, respectively. If the adult and child walk past each other in a current frame, their ID numbers may be switched and the adult and child may be recognized as the ID number 2 and 1, respectively. In this case in step S105 a pattern image given the ID number 2 in the previous frame is selected for comparing with the candidate brightness image of the adult with the ID number 2. However, this pattern image corresponds to the child so that it does not match the candidate brightness image of the adult in step S106. Then, in step S107 the pattern image with a different ID number, that is, 1, is determined to be a match and the adult pedestrian is detected as a target object. In such a manner it is possible to efficiently detect a target object without fail.

Step S109 is executed when the candidate brightness image and the pattern image in the dynamic dictionary 258 match each other. In step S109 the result that the two images have matched is registered in a corresponding area of the history holder 260. Then, in step S113 the position coordinates of the candidate brightness image determined as the target object are output as a pattern matching or detection result, completing the pattern matching. As in the first embodiment a kind of the target object or the like can be output as a pattern matching result in addition to the position coordinates, when necessary.

Step S110 is executed when the candidate brightness image does not match any pattern image in the dynamic dictionary 258. In step S110 the candidate brightness image is compared with a pattern image in the static dictionary 259. In step S111 a determination is made on whether or not the candidate brightness image matches the pattern image in the static dictionary 259. When they match (Yes in step S111), the pattern image register/canceller 257 transfers the matching pattern image and its ID number to the dynamic dictionary 258 and registers the result that they have matched in a corresponding area of the history holder 260. Next, in step S113 the position coordinates of the candidate brightness image determined as the target object are output as a pattern matching or detection result, completing the pattern matching. As in the first embodiment a kind of the target object or the like can be output as a pattern matching result in addition to the position coordinates, when necessary.

Meanwhile, when no matching pattern images are found in the static dictionary 259 (No in step S111), the candidate brightness image in question is determined to be a non-target object. Then, in step S113 the result that no target object is detected from the candidate brightness image is output as a pattern matching result, completing the pattern matching. Alternatively, the pattern matching can be completed with no result output.

As described above, according to the image processing unit in the second embodiment the tracker 270 is configured to track a target object and apply an ID number thereto. The pattern matcher 254 checks whether there is any pattern image with the same ID number as that of the candidate brightness image in the dynamic dictionary 258. Thus, by comparing the candidate brightness image with the pattern images with the same ID number, the number of pattern images to compare can be decreased. Thereby, it is possible to shorten the processing time taken for the pattern matching and rapidly detect a target object. This further enables the vehicle control unit 300 to more quickly deal with a target object, for example, preventing collision with the target object.

Although the present invention has been described in terms of exemplary embodiments, it is not limited thereto. It should be appreciated that variations or modifications may be made in the embodiments described by persons skilled in the art without departing from the scope of the present invention as defined by the following claims. For instance, a feature amount corresponding to a pattern can be used in place of pattern image. Further, the present invention is applicable to a structure comprising a single camera or three or more cameras, a structure using brightness image data alone, and the like in addition to the above-described stereo camera using disparity image data.

**Claims**

1. An image processing unit comprising:

   a first feature amount storage (259) in which a certain feature amount of a candidate of an object to be recognized in an image is stored, the image being input in a unit of frame from an imager (100);
   an image processor (200) including a second feature amount storage (258) in which the certain feature amount is stored when the candidate of the object corresponds to the certain feature amount stored in the first feature amount storage; and
   a target object detector (250) to detect, on the basis of the second feature amount storage, the candidate of the object as a target object from the image of frames subsequent to a frame including the certain feature amount stored in the second feature amount storage, and when the target object is not detected, to detect the target object on the basis of the first feature amount storage.

2. The image processing unit according to claim 1, wherein
   the image processor includes the first feature amount storage (259);

3. The image processing unit according to either claim 1 or 2, wherein:

   the image processor includes a disparity calculator (210) to generate disparity image data on the basis of images input in a unit of frames from a plurality of imagers; and
   the target object detector is configured to detect the candidate of the target object on the basis of the disparity image data.

4. The image processing unit according to claim 3, wherein
   the image processor includes
   a vertical disparity data generator (220) to generate vertical disparity data indicating a relation between a vertical coordinate of the image and a disparity value, on the basis of the disparity image data;
   a moving plane detector (230) to detect a plane (RS) on which the target object moves; and
   a horizontal disparity data generator (240) to generate horizontal disparity data indicating a relation between a horizontal coordinate of the image and a disparity value adjacent to the moving plane, on the basis of the disparity image data and the moving plane, wherein
   the target object detector is configured to detect the candidate of the target object on the basis of the horizontal disparity data.

5. The image processing unit according to one of claims 1 to 4, wherein
   the target object detector is configured to delete the certain feature amount from the second feature amount storage when the candidate of the target object of the image does not correspond to the certain feature amount stored in the second feature amount storage in a certain number of continuous frames.

6. The image processing unit according to claim 5, wherein
   the target object detector is configured to
   delete the certain feature amount from the first feature amount storage at a time of storing the certain feature amount in the second feature amount storage, when the candidate of the target object corresponds to the certain feature amount stored in the first feature amount storage, and
   register the certain feature amount in the first feature amount storage at a time of deleting the certain feature amount from the second feature amount storage, when the candidate of the target object does not correspond to the certain feature amount stored in the second feature amount storage in the certain number of continuous frames.

7. The image processing unit according to one of claims 1 to 6, wherein:

   the target object detector (250) includes a tracker (270) to estimate a position coordinate of the candidate of the target object detected in a current frame according to a position coordinate of the target object detected in a previous frame and apply an identifier to the candidate when the candidate corresponds to the target object detected in the previous frame;
   a feature amount of the candidate applied with the identifier is stored in the second feature amount storage in association with the identifier; and
   the target object detector is configured to detect the target object on the basis of the second feature amount storage when the identifier is applied to the candidate.

8. The image processing unit according to either claim 3 or 4, wherein
   the target object detector (250) is configured to specify a kind of the target object according to a size of the target object obtained from the disparity image data.

9. The image processing unit according to claim 8, wherein
   the horizontal disparity data generator (240) is configured to create items of horizontal disparity data different in height from the moving plane, in accordance with the kind of the target object.

10. The image processing unit according to one of claims 1 to 9, wherein the feature amount is a pattern image.

11. An object detection method using the image processing unit according to claim 1, comprising:

when the candidate of the target object corresponds to the certain feature amount stored in the first feature amount storage (259), storing the certain feature amount in the second feature amount storage (258);
first detecting the target object from the image of frames subsequent to a frame including the certain feature amount stored in the second feature amount storage, on the basis of the second feature amount storage; and
when the target object is not detected in the first detecting, detecting the target object on the basis of the first feature amount storage.

12. A non-transitory computer-readable storage medium storing a program for causing a computer to function as the image processing unit according to one of claims 1 to 10, comprising:

when the candidate of the target object corresponds to the certain feature amount stored in the first feature amount storage (259), storing the certain feature amount in the second feature amount storage (258);
detecting first the target object from the image of frames subsequent to a frame including the certain feature amount stored in the second feature amount storage, on the basis of the second feature amount storage; and
when the target object is not detected in the first detecting, detecting the target object on the basis of the first feature amount storage.

13. A vehicle control system (500) comprising;
a vehicle controller (300) to control a motion of a vehicle;
an imager (100) to image a surrounding of the vehicle as a target area;
the image processing unit according to one of claims 1 to 10, to detect a target object present in the target area from an image input from the imager.

# FIG.1

# FIG.2

EP 2 838 050 A2

# FIG.3

EP 2 838 050 A2

# FIG.4

# FIG.5

254

PATTERN MATCHER

CANDIDATE
BRIGHTNESS
IMAGE

DYNAMIC
PATTERN
MATCHER

DYNAMIC
PATTERN
IMAGE

258

DYNAMIC
DICTIONARY

255

257

260

HISTORY
HOLDER

PATTERN
IMAGE
REGISTER/
CANCELLER

DETECTION
RESULT
(MATCHING RESULT)

MATCH
FLAG

STATIC
PATTERN
MATCHER

STATIC
PATTERN
IMAGE

STATIC
DICTIONARY

256

259

# FIG.6

# FIG.7A

CORRECTED IMAGE DATA a1'

# FIG.7B

VERTICAL DIPARITY GRAPH

# FIG.8

10

CORRECTED
IMAGE DATA a1'

0 ──→x

0

y

Disparity

A

B

C

30

HORIZONTAL
DISPARITY GRAPH

Horizontal axis

# FIG.9

```
          ┌─────────────┐
          │    START    │
          └─────────────┘
                 │
                 ▼
    ┌──────────────────────────┐
    │    IMAGE DATA INPUT      │───── S1
    └──────────────────────────┘
                 │
                 ▼
    ┌──────────────────────────┐
    │    IMAGE CORRECTION      │───── S2
    └──────────────────────────┘
                 │
                 ▼
    ┌──────────────────────────┐
    │       CORRECTED          │───── S3
    │    IMAGE DATA INPUT      │
    └──────────────────────────┘
                 │
                 ▼
    ┌──────────────────────────┐
    │   DISPARITY IMAGE DATA   │───── S4
    │       GENERATION         │
    └──────────────────────────┘
                 │
                 ▼
    ┌──────────────────────────┐
    │   VERTICAL DISPARITY     │───── S5
    │    GRAPH GENERATION      │
    └──────────────────────────┘
                 │
                 ▼
    ┌──────────────────────────┐
    │     ROAD SURFACE         │───── S6
    │      DETECTION           │
    └──────────────────────────┘
                 │
                 ▼
    ┌──────────────────────────┐
    │  HORIZONTAL DISPARITY    │───── S7
    │    GRAPH GENERATION      │
    └──────────────────────────┘
                 │
     ┌───────────┼──────────────────┐──── S8
     │           ▼                  │
     │  ┌──────────────────────┐    │
     │  │    TARGET OBJECT     │──────── S81
     │  │     DETECTION        │    │
     │  └──────────────────────┘    │
     │           │                  │
     │           ▼                  │
     │  ┌──────────────────────┐    │
     │  │ CANDIDATE BRIGHTNESS │──────── S82
     │  │   IMAGE EXTRACTION   │    │
     │  └──────────────────────┘    │
     │           │                  │
     │           ▼                  │
     │  ┌──────────────────────┐    │
     │  ║   PATTERN MATCHING   ║──────── S83
     │  └──────────────────────┘    │
     └───────────┼──────────────────┘
                 ▼
          ┌─────────────┐
          │     END     │
          └─────────────┘
```

# FIG.10

START

S831 — CANDIDATE BRIGHTNESS
IMAGE DATA INPUT

S832 — ANY PATTERN IMAGE
FOUND IN DYNAMIC DICTIONARY
HAVING NOT MATCHED CONTINUOUSLY
IN PREVIOUS FRAMES ?

Yes → S833

TRANSFER PATTERN IMAGE
FROM DYNAMIC DICTIONARY TO
STATIC DICTIONARY

INITIALIZE DATA
CORRESPONDING TO PATTERN IMAGE
IN HISTORY HOLDER

No

S834 — PATTERN MATCHING
WITH PATTERN IMAGE
IN DYNAMIC DICTIONARY

S835 — ANY MATCHING
PATTERN IMAGE?

Yes → S837

REGISTER MATCHING RESULT
IN HISTROY HOLDER

No

S836 — PATTERN MATCHING
WITH PATTERN IMAGE
IN STATIC DICTIONARY

S838 — ANY MATCHING
PATTERN IMAGE?

Yes → S839

REGISTER
MATCHING PATTERN IMAGE
IN DYNAMIC DICTIONARY
AND HISTORY HOLDER

No

S840 — OUTPUT DETECTION RESULT
(MATCHING RESULT)

END

# FIG.11

# FIG.12

270 · TRACKER

DETECTION RESULT

271 · PREVIOUS RESULT WRITER/ READER

271a · PREVIOUS RESULT HOLDER

DETECTION RESULT

272 · AREA ESTIMATOR

ESTIMATED AREA

273 · ESTIMATED-AREA DETECTOR

ESTIMATION RESULT

274 · IDENTICAL OBJECT DETERMINER

DETERMINAOTION FLAG
ESTIMATION RESULT
ID NUMBER

275 · SELECTOR

TRACKING OR TARGET OBJECT DETECTION RESULT

EP 2 838 050 A2

# FIG.13

```
                    ( START )
                        │
                        ▼
S21 ┌─────────────────────────────────────┐
    │       DETECTION RESULT INPUT         │
    └─────────────────────────────────────┘
                        │
                        ▼
    ┌─────────────────────────────────────┐
    │   STORE DETECTION RESULT OF          │
    │   CURRENT FRAME IN HOLDER            │
S22 │                                     │
    │   READ DETECTION RESULT              │
    │   OF PREVIOUS FRAME                  │
    └─────────────────────────────────────┘
                        │
                        ▼
    ┌─────────────────────────────────────┐
    │          ESTIMATE AREA OF            │
S23 │  TARGET OBJECT FROM PREVIOUS         │
    │        DETECTION RESULT              │
    └─────────────────────────────────────┘
                        │
                        ▼
    ┌─────────────────────────────────────┐
S24 │       DETECT TARGET OBJECT           │
    │         IN ESTIMATED AREA            │
    └─────────────────────────────────────┘
                        │
                        ▼
    ┌─────────────────────────────────────┐
    │  COMPARE ESIMATION RESULT WITH       │
S25 │     DETECTION RESULT OF              │
    │        PREVIOUS FRAME                │
    └─────────────────────────────────────┘
                        │
                        ▼
S26 <     SAME OBJECT ? >─────────────Yes─────────┐
                        │                          │
                       No                          │ S29
                        │                          ▼
S27 ┌──────────────────────┐      ┌──────────────────────────┐
    │ SET DETRMINATION     │      │ SET DETRMINATION FLAG TO 1│
    │ FLAG TO ZERO         │      └──────────────────────────┘
    └──────────────────────┘                   │
                        │                        ▼
                        │        S30 ┌──────────────────────────┐
                        │            │    ADD ID NUMBER TO      │
                        │            │   ESTIMATION RESULT      │
                        │            └──────────────────────────┘
                        ▼                        ▼
S28 ┌──────────────────────┐      ┌──────────────────────────┐
    │ OUTPUT DETECTION     │      │   OUTPUT TRACKING RESULT  │
    │ RESULT               │      │ (ESTIMATION RESULT WITH   │
    └──────────────────────┘      │        ID NUMBER)         │
                        │          └──────────────────────────┘
                        ▼                        │
                    ( END )◄────────────────────┘ S31
```

27

# FIG.14

START

S101 — INPUT CANDIDATE BRIGHTNESS IMAGE DATA WITH ID NUMBER

S102 — ANY PATTERN IMAGE FOUND IN DYNAMIC DICTIONARY HAVING NOT MATCHED CONTINUOUSLY IN PREVIOUS FRAMES ?

Yes →

S103 — TRANSFER PATTERN IMAGE FROM DYNAMIC DICTIONARY TO STATIC DICTIONARY

INITIALIZE DATA CORRESPONDING TO PATTERN IMAGE IN HISTORY HOLDER

No ↓

S104 — ANY PATTERN IMAGE IN DYNAMIC DICTIONARY HAS SAME ID NUMBER AS THAT OF CANDIDATE BRIGHTNESS IMAGE?

Yes →

S105 — COMPARE THE TWO IMAGES

No ↓

S107 — COMPARE CANDIDATE BRIGHTNESS IMAGE WITH PATTERN IMAGE WITH DIFFERENT ID NUMBER

No ←

S106 — ANY MATCHING PATTERN IMAGE?

Yes ↓

S108 — ANY MATCHING PATTERN IMAGE?

Yes →

S109 — REGISTER MATCHING RESULT IN HISTROY HOLDER

No ↓

S110 — PATTERN MATCHING WITH PATTERN IMAGE IN STATIC DICTIONARY

S111 — ANY MATCHING PATTERN IMAGE?

Yes →

S112 — REGISTER MATCHING PATTERN IMAGE IN DYNAMIC DICTIONARY AND HISTORY HOLDER

No ↓

S113 — OUTPUT DETECTION RESULT (MATCHING RESULT)

END

28

# FIG.15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012164275 A